# EUROPEAN PATENT APPLICATION

(11) **EP 1 475 942 A2**
(43) Date of publication of application: **10.11.2004**
(21) Application number: 04300201.3
(22) Date of filing: 08.04.2004
(51) Int. Cl.: H04L 29/12, H04L 12/46

(54) **Address Resolution in IP Internetworking Layer 2 point-to-point connections**

(30) Priority: 11.04.2003 US 411264
(71) Applicant: ALCATEL, 75008 Paris (FR)
(72) Inventor: Watkinson, David, Kanata, Ontario K2K 3L6 (CA); Fischer, John, Stittsville, Ontario K2S 1E3 (CA); Anastasiadis, Chris, Ottawa, Ontario K2M 1G2 (CA); Chan, Hansen, Ottawa, Ontario K2K 2T2 (CA)
(74) Representative: Feray, Valérie

(57) **Abstract**

A heterogeneous point-to-point link involves different technologies at it two ends, e.g., Ethernet at one end and ATM or Frame Relay at the other end. If two IP systems are connected via a heterogeneous point-to-point link, each may be using different address learning techniques. It is up to the Provider Edge devices to make these different techniques inter-work. A novel provider edge device and procedures that the edge device it to perform for forwarding packets properly are described. According to the invention, the provider edge device uses a broadcast address to forward the packet in one direction toward a customer edge device. In another direction, the provider edge device responds to an ARP request from the customer edge device with its own MAC address so that it can receive a packet from the customer edge device.

## Description

### Field of Invention

The invention resides in the field of the operation and management of telecommunications networks which provide a point-to-point connections (or links). In particular, it relates to address mediation (or resolution) in a point-to-point connection for layer 2 (L2 for short) traffic which involves disparate L2 networks.

### Background of Invention

Network service providers (SPs for short) now provide L2 services which offer point-to-point connectivity in communication networks. One example of such services is Layer 2 VPN (L2 VPN). The VPNs are private networks which are built over private local networks and public networks, and utilize services provided by SPs as if the private networks are leased lines. For example, a private network can be virtually built by connecting local area networks (LANs) in a company through the Internet (IP or MPLS traffic). When a private network is built in this manner, the private network becomes free from the physical network structure, and has high flexibility and expandability. Normally, these services would make use of technologies such as Ethernet, FR (frame relay), PPP (point-to-point protocol), or ATM.

Ethernet has been a popular LAN technology for use in access channels and WAN lines and it has become more so with the acceptance of Gigabit Ethernet through its use in Metropolitan Area Networks (MANs) and good bandwidth fit. In Layer 2 VPNs, Ethernet links may be dedicated completely to a single customer, or may be shared. A shared Ethernet link uses IEEE 802.1 Q VLAN tags to identify different customer's traffic. Both Ethernet ports and VLANs can be used as Layer 2 VPN connection endpoints.

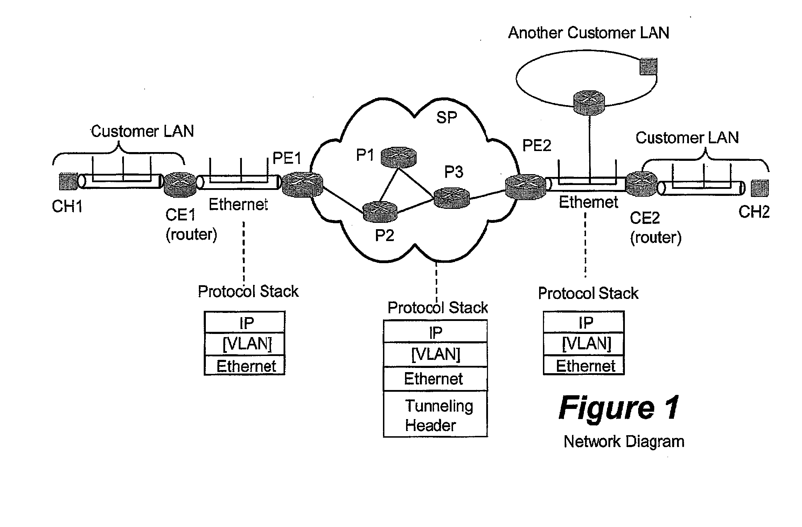

In Figure 1, an L2 VPN connection involves a pair of customer edge devices, CE1 and CE2, communicating through a network provided by a network service provider, SP. CE1 and CE2 are connected to the provider edge devices, PE1 and PE2, of the network through Ethernet segments and communicate transparently with one another as if they were on the same Ethernet, holding a point-to-point dedicated connection. The SP delivers all Ethernet packets between the customers transparently. It should be noted that CEs are customer edge devices e.g., router, host, bridge or switch, of the customer's local networks (customer LAN) which can be of any types, such as Ethernet, ATM etc. The segment between the CE and PE, however, is an Ethernet. Therefore, any customer's host computer on either customer LAN is able to communicate with any other on either customer LAN.

The SP provisions connections in advance between the CE1 and CE2. The establishment of these connections is outside of the scope of this specification and are assumed to exist based on prior art. Any of, but not limited to MPLS (Multi-Protocol Label Switching), IP, L2TP, FR, ATM tunneling/connection mechanisms can be used as defined by IETF PWE3 and PPVPN working groups or ATM Forum AF-AIC-0178, IETF RFCxxxx, IETF RFC2427 and IETF RFC2684 respectively.

Referring further to Figure 1, when a customer host, CH1, on one LAN wishes to communicate with another customer host, CH2, on another LAN, it composes an IP data packet, specifying srclP (source IP address) and destlP (destination IP address). In this case, srclP is the IP address of CH1 and destlP is the IP address of CH2. In this example, the local LAN is Ethernet, although it could be other technologies such as Token Ring, etc. In order for CH1 to transmit the IP packet onto the local LAN, it must encapsulate it into an Ethernet frame. This requires CH1 to fill in the SA (Ethernet Source Address) as its own MAC address and to resolve the destlP into a DA (Ethernet Destination Address). Since CH1 knows that the destlP is in another IP subnet, the host (CH1) knows that it must be addressed to the default router. CH1 sends an ARP request to determine the default router's MAC address by specifying the IP address of the configured default router (CE1) in the request. CE1 replies with its MAC address and CH1 is able to send the packet on the local LAN. CE1 picks it up because the DA is addressed to CE1. CE1 strips the Ethernet information and performs an IP routing table lookup on the destlP. It knows to forward the packet across the link to the next hop router CE2 since CE2 advertised IP reachability to CH2's subnet. CE1 encapsulates the IP data packet into an Ethernet frame, attaching SA and DA. SA, in this case, is the MAC address of the PE1-facing Ethernet interface on CE1 and DA is that of the next hop router CE2. CE1 resolves the DA of CE2 by sending an ARP request with CE2's IP address since CE1 and CE2 are communicating routers and know one another's IP address. CE1 sends the Ethernet frame to PE1.

Continuing in Figure 1, the SP delivers what it has received at PE1 intact to PE2. PE2 then delivers the Ethernet frame to CE2 at DA. CE2 picks up the packet addressed to its MAC address and strips the Ethernet information. It then performs a destlP lookup and forwards the packet onto its local LAN towards CH2. It then encapsulates the IP data packet with srclP and destlP into an Ethernet frame and sends it to CH2. The SA is the MAC address of the CH2-facing interface on CE2 and the DA is that of CH2 (resolved through an ARP request on the destlP in the packet). In this way, a virtual Ethernet pipe is created between CE1 and CE2 through the use of protocol stacks shown in the figure. In some cases, VLAN tags are used to identify any specific Ethernet pipe between the CE and PE if multiple customers share the same physical Ethernet port, as shown in the Figure.

It should be noted that in the specification, "packet", "frame" and "cell" are used synonymously as are "edge device", "node", "router" and "switch". Likewise, "connection" and "link" are used interchangeably.

It is also possible that an L2 VPN connection may be a heterogeneous point-to-point connection, where the two ends of the connection use different technologies, e.g., one end is Ethernet and the other is FR or ATM. Connections formed between different L2 technologies, e.g. Ethernet and ATM or FR etc., require special handling for address learning. For example, if two IP systems are connected via a heterogeneous point-to-point connection, each may be using different address learning techniques, for instance, one using ARP on Ethernet and the other using Inverse ARP or similar procedures on ATM or FR. It is up to the SP's routers (or switches), such as PEs to make these different techniques inter-work.

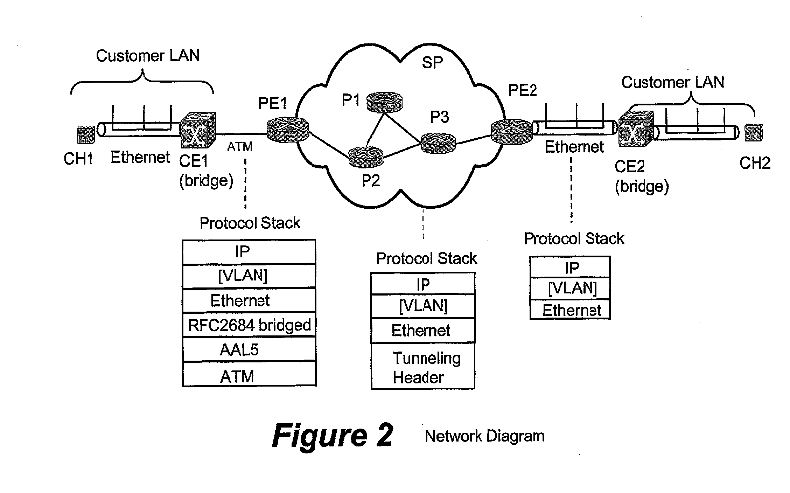

Figure 2 shows a heterogeneous connection involving ATM bridged Ethernet at one end and Ethernet at the other. This type of heterogeneous connection does not require the use of the invention. In the figure, CE2 is connected to SP through an Ethemet and CE1 is connected to SP at the other end through an ATM network. In the ATM bridged Ethernet, CE1 is an Ethernet node on a customer LAN which in turn may be made up of two or more different types of LAN segments. CE1 connects to PE1 through the ATM network to access the network. The connection between CE1 and PE1 is accomplished through the protocol stacks shown in the figure. CE2, on the other hand, directly connects to PE2 through an Ethernet. CE2 is a node of customer's another LAN which may consist of any LAN configuration. In one direction, CE1 segments an Ethernet frame into ATM cells and sends them to PE1. PE1 reassembles ATM cells back into the Ethernet frame and delivers it across the SP network to PE2 and then to CE2. The ARP procedures to be used to obtain MAC addresses are the same as those described in connection with Figure 1 if CE1 and CE2 are routers. In this example, CE1 and CE2 are described as Ethernet bridges/switches. Again, CE1 and CE2 communicate with one another as if they are on the same Ethemet. If CH1 sends an IP packet to CH2, it must resolve the destlP address to a DA. Since the destlP address of CH2 is in the same subnet as CH1, it will ARP with CH2's IP address directly. CE1 passes the broadcast ARP on towards PE1, who transports the frame transparently to PE2. PE2 in turn passes the frame to CE2 who passes it onto its local LAN. CH2 replies with its MAC address and CE2 and CE1 team the whereabouts of CH2s MAC address. CH1 then encapsulates the IP packet with its own SA and the DA of CH2 and sends the frame on the LAN. It is picked up by CE1 and the DA lookup indicates to send the frame towards PE1, encapsulating it according to RFC2684 and segmenting it into ATM cells towards PE1. PE1 reassembles the frame and forwards it to PE2 over the SP network. PE2 passes it on to CE2. CE2 receives the frame and the DA lookup indicates to send the frame towards CH2 on the local LAN. CH2 receives the IP packet.

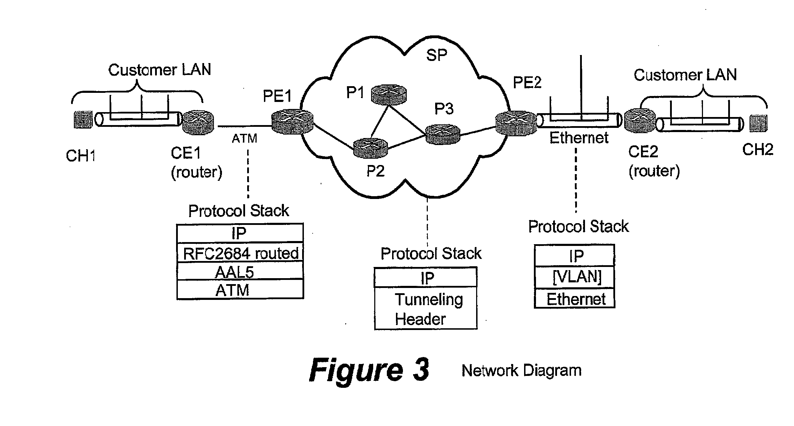

Figure 3 shows a heterogeneous point-to-point connection of a different type that requires special address resolution on the PEs. In the figure, an attached circuit to the network at one end is an Ethernet interface, while at the other end, an ATM segment connects CE1 and PE1. This is called ATM encapsulated routed IP and the protocol stack in the ATM segment is shown in the figure. There are other ways to encapsulate routed IP such as FR and PPP with essentially similar behaviour. The Ethernet interface at one end emulates to the FR DLCI or ATM VPI/VCI on the other end. The Ethernet interface may also use VLAN tag. Any attempt to make use of such heterogeneous circuits faces the following problems:
1. Different encapsulations may be used on the two attached circuits. Frames from one attached circuit cannot just be forwarded unchanged on the other. The frames must be processed by some sort of interworking function.
2. A CE device may execute procedures which are specific to a particular type of attached circuit, and it may presuppose that the CE at the other end of the CE-CE circuit is executing those same procedures. Therefore, if the two CEs are attached to PEs via different types of attached circuits, and are executing different procedures specific to the attached circuits, some means of mediating between those different procedures is needed.

SPs are providing a point-to-point L2 service, normally interfacing to customers using technologies such as FR, PPP (point-to-point protocol) or ATM. When a customer wants to upgrade existing links to, for example, Gigabit Ethernet while keeping the rest of the network untouched using ATM (or other) encapsulated routed IP, they often encounter these problems if the customer wasn't already using Ethernet for attachments to other sites.

There are a few solutions to the above problems.
(a). IP and MAC addresses can be statically configured on the PE networking equipment.
(b). An IETF draft defines a method for learning the Layer 2 addresses and communicating them through the network as needed.
(c). US Application 20030037163 by Kitada et al, published on Feb. 20, 2003 describes a method and system for enabling Layer 2 transmission of IP data frame between user terminal and service provider.

Problems with solution (a) are that the SP does not know anything about the customer's network, not even a single IP address. If addresses are hard-configured, this is no longer true. Conversely, the CEs do not know anything about the service provider's network, not even a single IP address. They only know about their own local or remote CEs. Furthermore, if a piece of equipment fails, it would be desirable to replace it without any reconfiguration. Configuring MAC or IP addresses is unwieldy and generally avoided.

As for solution (b), the following description refers to Figure 3. According to the IETF draft, one way of PE2 learning an Ethemet-attached CE2's IP address is to wait for the CE2 to generate the ARP request for CE1 or send gratuitous ARP on startup. The Ethernet (MAC) address and IP address of CE2 can then be gleaned from the request. Once the PE2 learns the IP address of the CE2, the CE2's IP address is signaled to remote PE1. However, PE2 does not know the IP address of CE1 and therefore does not respond to the ARP request for CE1's IP address yet. Meanwhile, at the ATM side, CE1 sends an inverse ATM ARP request to PE1, requesting for a PVC (an IP subnet on ATM) to CE2. If PE1 does not know the IP address of CE2, it does not respond. PE1, however, notes the IP address of CE2 and the PVC information (ATM address e.g., VPINCI) and sends CE2s IP address to PE2. When the CE2's IP address becomes available, as in the process described above, PE1 responds to the CE1's request with an inverse ATM ARP reply, informing CE1 that CE2's IP address associated to PE1's ATM address. Also at PE2, PE2 has now learned CE1 's IP address and therefore PE2 can now reply to CE2s ARP request, informing CE2 that CE1's IP address is associated to PE2's CE2-facing interface's MAC address. CE1 and CE2 have now learned sufficient address information to communicate with one another at the IP layer. This ARP mediation is quite complex and network communications are used.

Problems with solution (c) are described as follows. This patent application by Kitada et al teaches (in paragraph 306) keeping a local ARP table at a PE L2 switch. Responsive to receiving an ARP request from a local host the L2 switch uses the IP address of the desired destination to look up the MAC address of the destination and returns the MAC address in an ARP reply to the local host. When the MAC address is not found in the ARP table the L2 switch broadcasts an ARP requests to only other switches, and not to other hosts. The local host sends the IP frame to the destination in L2 (by MAC bridging). The patent application also describes the so-called Proxy ARP operation of the prior art. The Proxy ARP operation is performed by a router. When a router receives an ARP request from a user, the router returns the MAC address of the router to the user, and an IP frame from the user is transferred to its destination by L3 routing.

As described thus far, the IP address resolution on L2 interworking in a heterogeneous network is complex.

As mentioned earlier, when the network service provider installs an Ethernet interface between its edge device, e.g., PE2, and a customer edge device, e.g., CE2., and provides a VPN services (L2 point-to-point links) between two customer's edges CE1 and CE2, through a heterogeneous link, involving a non Ethernet interface such as ATM, the network service provider must ensure that its edge device e.g., PE2, has a capability of resolving (or mediating) between L2 addresses e.g., MAC, ATM, and FR addresses, and L3 addresses, e.g., IP addresses of CEs.

Good solutions to these problems are required by network service providers who should perform necessary procedures in order to allow correct operation across heterogeneous point-to-point links. The present invention proposes novel procedures which achieves the desired result without performing the address resolution (mediation) between PE devices.

It should be noted that although the above description deals with heterogeneous point-to-point links, involving IP traffic on Ethernet and ATM, similar problems are encountered in IP traffic on heterogeneous L2 links where one endpoint is Ethernet and the other is PPP or FR.

### Summary of Invention

In accordance with one aspect, the invention proposes novel procedures that a PE performs to forward a packet received from a remote device on a heterogeneous point-to-point L2 link.

According to another aspect, the invention is directed to procedures that a PE performs to receive a packet from a local CE and forward it to a remote host over a heterogeneous point-to-point L2 link.

In accordance with a further aspect, the invention proposes a novel provider edge device which performs interworking different technologies on a heterogeneous point-to-point L2 link.

In a specific aspect, the invention is directed to a method of forwarding a packet from a first node to a second node over an Ethernet link which forms an end segment of a point-to-point layer 2 link. The method includes steps of receiving the packet at the first node over the point-to-point layer 2 link, encapsulating the packet in an Ethernet frame, and forwarding the Ethernet frame to the second node using a broadcast MAC address.

In accordance with yet another aspect, the invention is directed to a method of receiving a packet at a first node from a second node over an Ethernet link which forms an end segment of a point-to-point layer 2 link. The packet is to be forwarded to a remote node of the point-to-point layer 2 link. The method comprises steps of receiving an ARP request from the second node, the ARP request specifying the remote node on a point-to-point layer 2 link, replying with a response identifying a MAC address of the first node, and receiving the packet from the second node at the MAC address to be forwarded to the specified remote node.

In accordance with a further aspect, the invention is a method of forwarding a packet from a first node in one of two directions, downstream and upstream, over a point-to-point layer 2 link which contains an Ethernet segment at a downstream end. The Ethernet segment carries the first node and a second node, the second node of which is located downstream from the first node. The method comprises, in the downstream direction, steps of receiving the packet at the first node over the point-to-point layer 2 link, encapsulating the packet in an Ethernet frame, and forwarding downstream the Ethemet frame to the second node using a broadcast MAC address. The method further includes, in the upstream direction, steps of receiving an ARP request from the second node, the ARP request specifying a remote node located upstream on the point-to-point layer 2 link and replying with a response identifying a MAC address of the first node. The method includes also steps of receiving the packet from the second node with the MAC address, and forwarding upstream the packet to the remote node.

According to a further aspect, the invention is directed to a node for forwarding a packet in one of the two directions, downstream and upstream, over a point-to-point layer 2 link which contains an Ethernet segment at a downstream end. The node is to be located upstream of a second node on the Ethemet segment. The node comprises a network module for receiving and forwarding the packet over the point-to-point layer 2 link in one of the two directions, and a transport fabric for transporting the packet in the upstream and downstream directions. The node further includes a database for holding a broadcast address for the Ethernet segment, and an Ethernet module for encapsulating the packet in an Ethemet frame and forwarding downstream the Ethemet frame to the second node using a broadcast MAC address, and receiving the Ethernet frame from the second node at a MAC address of the node and converting it for transport upstream.

### Brief Description of Drawings

Figure 1 is a schematic illustration of a network diagram showing an Ethernet L2 point-to-point connection, which involves Ethernet links to both customer site routers.
Figure 2 is a schematic illustration of a network diagram showing an Ethernet L2 point-to-point connection, which involves ATM bridged Ethernet and Ethernet to customer site bridges.
Figure 3 is a schematic illustration of a network diagram showing an IP interworking L2 point-to-point connection, which involves ATM routed IP and Ethernet connections to customer routers.
Figure 4 is a diagram showing packet transfer sequences for IP interworking L2 connections.
Figure 5 is a block diagram of an edge device of a network service provider.

### Detailed Description of Embodiments

Referring back to Figure 3 which shows schematically an example of a layer 2 VPN. As described earlier, in order to provide the point-to-point connectivity, between CE1 and CE2, a common data format of IP is tunneled between PE 1 and PE2. This data can be transported over any provider core network (e.g. ATM, FR, IP, L2TP, or MPLS) made up of provider devices, P1, P2,... Pn. CE1 and CE2 are edge devices of customer's LANs, on which local host computers are located. In the Figure, an interface between CE1 and PE1 is an ATM link whereas that between CE2 and PE2 is an Ethernet link. The figure also shows schematically that the Ethernet serves other edge devices in VLAN. As CE1 and CE2 are on the respective LAN and have a point-to-point connection with the respective local host computer, a connection between CE1 and CE2 are considered equivalent to a connection between the host computers.

There are two aspects to the present invention.
(i) The first is forwarding, to CE2, L2 frames (containing CE2's IP packets) received at PE2 from CE1 of a point-point L2 connection, wherein the MAC and IP addresses of CE2 are not known at PE2.
(ii) The second aspect of the invention is forwarding, to CE1, L2 frames (Ethernet frames containing IP packets) received at PE2 from CE2, wherein the MAC and IP addresses of CE1 are not known at PE2.

For the matter of convenience for description, in this specification the direction from CE1, PE1, PE2 and towards CE2 is considered "downstream" and the opposite direction is "upstream".

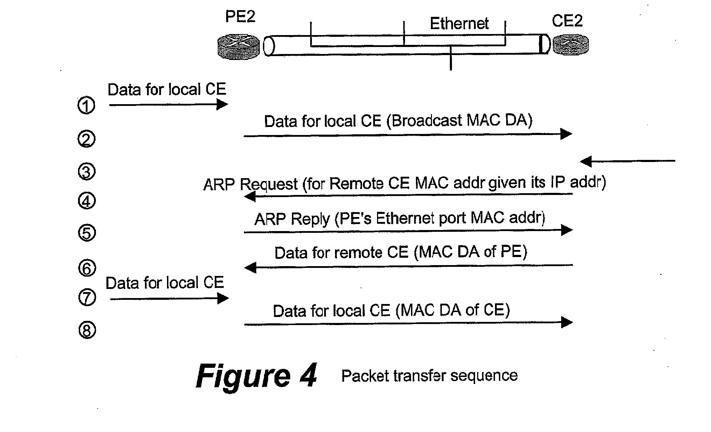

With respect to (i) above, in accordance with an embodiment of the invention, it has been realized that PE2 can use a broadcast MAC address to send the incoming L2 frames to CE2. By using the broadcast MAC address, PE2 does not have to know the IP address of CE2 or resolve the MAC address. This is because the end-to-end connection is point-to-point and therefore there is only one host, e.g., CE2 on the Ethernet segment or VLAN. Under a service contract, SP generally specifies to which Ethernet port or VLAN of PE2, the customer can send traffic and there is only one host/routet/CE on each VLAN interface. Therefore, even though the packets are sent to the broadcast MAC address, they are directly sent to CE2 because there are no other devices on the Ethernet port or VLAN. This procedure is contrasted to the known procedures described above. In the prior art, the ARP protocol is used to request the MAC address when the IP address of the CE is known. However, in the present situation, the IP address of the CE2 is not known. It is therefore decided not to configure or leam the IP address of the CE2, but to use the broadcast MAC address. These procedures are shown in steps 1 and 2 in Figure 4.

As for (ii), a similar problem results at CE2 connected to the Ethemet segment, when a host is trying to send data packets to/through the remote CE1. In this situation, the local CE2 is assumed to know the IP address of CE1 since it is part of the same customer network. It is a good assumption because CE1 and CE2 know each other's IP address and CE1 has been instructed which VPI/VCI or FR DLCI to use under the SP contract. In order to resolve the IP address of CE1 to the L2 MAC address of PE2, CE2 will broadcast an ARP request on the Ethernet segment to PE2. In accordance with an embodiment of the invention, when PE2 receives an ARP request from CE2 for any IP address, it always replies, indicating PE2's MAC address. Now that CE2 knows PE2's MAC address, it can send Ethernet encapsulated IP packets towards CE1 through PE2, specifying PE2's MAC address. PE2 will process them and transmit them to PE1 which in tum send them to CE1. This is possible because since the end-to-end (CE1 to CE2) link is point-to-point, this CE2-PE2 link will only be used for communication with or through one particular remote CE and thus the local PE is only expecting ARP requests for one IP address. Therefore, it is not necessary to use configured addresses or ARP mediation to determine the MAC address of the requested IP address (CE1), as would be done according to the prior art. This invention teaches that the local PE shall reply to all ARP requests from the local CE with the MAC address of its Ethemet port connected to that CE. This is shown in steps 3 to 6 in Figure 4.

In the Kitada reference, a local ARP table of MAC addresses of hosts are kept in the PE which replies to ARP requests from the local host with MAC address of the remote host. This is clearly different from the procedure described above. Also the above procedures are different from Proxy ARP described in the Kitada reference. As discussed earlier, Proxy ARP is performed by a router. When a router receives an ARP request from a user, the router returns the MAC address of the router to the user, and an IP frame from the user is transferred to its destination by Layer 3 routing. In the present procedures described above, the frames from the local host are forwarded to the remote host over a point-to-point L2 connection according to the Ethemet port or VLAN on which they are received, and are therefore not IP routed.

In other circumstances, if PE2 has learned CE2's MAC address by some previous exchange, such as by above described ARP procedures, it can begin using it for all packets that it transmits to CE2 instead of using the broadcast MAC address. This is shown in steps 7 and 8 in Figure 4.

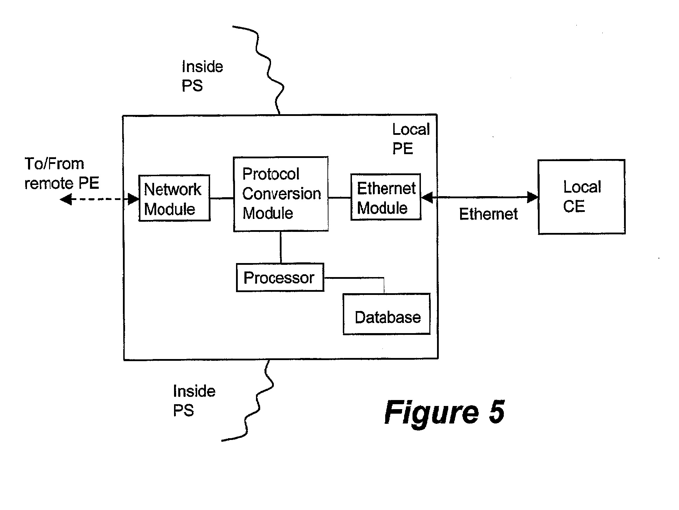

Referring to Figure 5, a PE includes network-facing and customer-facing components. It is able to connect to provider or customer networks through various technologies including, but not limited to, Ethernet, ATM, Frame Relay, and Packet Over Sonet. Specialized modules are used to interface to the different layer 2 technologies, for example, an Ethernet module is used for the network module of Figure 5 at the Ethernet segment between PE and CE. With a help of a transport fabric, PE devices may provide point-to-point, point-to-multipoint connection services as well as higher layer services like MPLS and IP forwarding. PEs are able to perform interworking between different technologies by converting between protocols, or terminating one, extracting the packet and originating another. The PE also comprises one or more processors and databases which store addressing information including IP, MAC, ATM, FR addresses.

As have been described in detail above, the present invention eliminates the need for the SP and customer to have knowledge of each other's networks. This increases the flexibility in the way they each run their own networks, and eliminates the need to negotiate upgrade windows to synchronize network changes, which would be required with prior art configured addressing. Since L2 addresses are learned dynamically the connectivity will automatically adapt to changes in the customers network. This saves time and operation costs, and reduces the possibility of configuration errors. The invention is more efficient than using prior art ARP mediation techniques because it eliminates the need for the remote PE to learn the IP addresses of all its connected CEs and to propagate this information to the local PE. Consequently, less protocol messaging and handling is required.

## Claims

1. A method of forwarding a packet from a first node to a second node over an Ethernet link which forms an end segment of a point-to-point layer 2 link, comprising steps of:
receiving the packet at the first node over the point-to-point layer 2 link;
encapsulating the packet in an Ethernet frame, and
forwarding the Ethernet frame to the second node using a broadcast MAC address.

2. The method according to claim 1, wherein the point-to-point layer 2 link is a VPN link involving a heterogeneous point-to-point connection and the packet is an IP packet.

3. The method according to claim 2, wherein the heterogeneous point-to-point connection involves one or more layer 2 networks of technology other than Ethernet.

4. The method according to claim 3, wherein the one or more layer 2 networks are made of any of the following technologies, ATM, PPP, and Frame Relay.

5. The method according to claim 4 wherein the first and second nodes are edge nodes of a network service provider and of a customer respectively.

6. A method of receiving at a first node a packet from a second node over an Ethernet link which forms an end segment of a point-to-point layer 2 link, the packet to be forwarded to a remote node of the point-to-point layer 2 link, comprising steps of:
receiving an ARP request from the second node, the ARP request specifying the remote node on the point-to-point layer 2 link;
replying with a response identifying a MAC address of the first node, and
receiving the packet from the second node at the MAC address to be forwarded to the specified remote node.

7. The method according to claim 6, further comprising a step of:
forwarding the received packet downstream to the remote node.

8. The method according to claim 7, further comprising steps of:
gleaning from the response a MAC address of the second node;
receiving a new packet over the point-to-point layer 2 link, and
forwarding said new packet to the second node at the gleaned MAC address over the Ethernet link,.

9. The method according to claim 8 wherein the point-to-point layer 2 link is a VPN link involving a heterogeneous point-to-point connection, and the packet and the new packet are IP packets.

10. The method according to claim 9, wherein the heterogeneous point-to-point connection involves one or more layer 2 networks of technology other than Ethernet.

11. The method according to claim 10, wherein the one or more layer 2 networks are made of any of the following technologies, ATM, PPP and Frame Relay.

12. The method according to claim 11 wherein the first and second nodes are edge nodes of a network service provider and of a customer respectively.

13. A method of forwarding a packet from a first node in one of two directions, downstream and upstream, over a point-to-point layer 2 link which contains an Ethernet segment at a downstream end, the Ethernet segment carrying the first node and a second node, the second node being downstream from the first node, comprising steps of:
in the downstream direction:
receiving the packet at the first node over the point-to-point layer 2 link;
encapsulating the packet in an Ethernet frame,
forwarding downstream the Ethernet frame to the second node using a broadcast MAC address, and
in the upstream direction:
receiving an ARP request from the second node, the ARP request specifying a remote node located upstream on the point-to-point layer 2 link;
replying with a response identifying a MAC address of the first node;
receiving the packet from the second node at the MAC address, and
forwarding upstream the packet to the remote node.

14. The method according to claim 13, further comprising steps of:
gleaning from the response a MAC address of the second node;
receiving a new packet over the point-to-point layer 2 link, and
forwarding downstream said new packet to the second node at the gleaned MAC address over the Ethernet segment,.

15. The method according to claim 14 wherein the point-to-point layer 2 link is a VPN link involving a heterogeneous point-to-point connection, and the packet and the new packet are IP packets.

16. The method according to claim 15, wherein the heterogeneous point-to-point connection involves one or more layer 2 networks of technology other than Ethernet.

17. The method according to claim 16, wherein the one or more layer 2 networks are made of any of the following technologies, ATM, PPP and Frame Relay.

18. The method according to claim 17 wherein the first and second nodes are edge nodes of a network service provider and of a customer respectively.

19. A node for forwarding a packet in one of two directions, downstream and upstream, over a point-to-point layer 2 link which contains an Ethernet segment at a downstream end, the node to be located upstream of a second node on the Ethemet segment, comprising:
a network module for receiving and forwarding the packet over the point-to-point layer 2 link in one of the two directions;
a transport fabric for transporting the packet in the upstream or downstream directions;
a database for holding a broadcast address for the Ethernet segment, and
an Ethernet module for encapsulating the packet in an Ethernet frame and forwarding downstream the Ethernet frame to the second node using a broadcast MAC address, and receiving the Ethernet frame from the second node at a MAC address of the node and converting it for transport upstream
